(19) Europäisches Patentamt
European Patent Office
Office européen des brevets

(11) **EP 4 715 457 A1**

(12) **EUROPEAN PATENT APPLICATION**
published in accordance with Art. 153(4) EPC

(43) Date of publication:
**25.03.2026 Bulletin 2026/13**

(21) Application number: **24824868.4**

(22) Date of filing: **12.01.2024**

(51) International Patent Classification (IPC):
**G02F 1/133** (2006.01) **G02F 1/13** (2006.01)
**G02F 1/1335** (2006.01)

(52) Cooperative Patent Classification (CPC):
**G02B 6/35; G02F 1/13; G02F 1/133; G02F 1/1335; G02F 1/13363; G02F 1/1337**

(86) International application number:
**PCT/CN2024/072053**

(87) International publication number:
**WO 2024/259964 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.06.2023 CN 202310748707**

(71) Applicant: **Huawei Technologies Co., Ltd.
Shenzhen, Guangdong 518129 (CN)**

(72) Inventors:
• **YAO, Wenjie**
 **Shenzhen, Guangdong 518129 (CN)**
• **LU, Lizhen**
 **Shenzhen, Guangdong 518129 (CN)**
• **LI, Tenghao**
 **Shenzhen, Guangdong 518129 (CN)**
• **LI, Shiqiang**
 **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **LIQUID CRYSTAL ON SILICON AND WAVELENGTH SELECTIVE SWITCH**

(57) A liquid crystal on silicon and a wavelength selective switch (100) are provided, to implement a polarization-independent LCoS device, and further reduce a second-order crosstalk problem that exists due to a deflection-unconverted residual, thereby ensuring application of the LCoS. In the LCoS, an additional phase is pre-added in a dispersion direction based on a metasurface design or a structure such as a phase film. Based on the pre-added phase, a high-frequency deflection or scattering phase is formed for polarization-unconverted light to make energy of the polarization-unconverted light deviate from a crosstalk order, to avoid crosstalk caused by the polarization-unconverted light on polarization-converted light, thereby suppressing second-order crosstalk in a port direction.

FIG. 7

**Description**

CROSS-REFERENCE TO RELATED APPLICATIONS

This application claims priority to Chinese Patent Application No. 202310748707.X, filed with the China National Intellectual Property Administration on June 21, 2023 and entitled "LIQUID CRYSTAL ON SILICON AND WAVELENGTH SELECTIVE SWITCH", which is incorporated herein by reference in its entirety.

TECHNICAL FIELD

This application relates to the field of optical communication technologies, and in particular, to a liquid crystal on silicon and a wavelength selective switch.

BACKGROUND

A liquid crystal is a substance having both fluidity of a liquid and ordering of a crystal, and features anisotropy in physical properties. Optically, adjusting an electric field applied to a liquid crystal molecule can change an orientation of the liquid crystal molecule and change a refractive index of the liquid crystal molecule for light whose polarization is parallel to the orientation of the liquid crystal molecule, so that voltage-controllable phase modulation can be implemented.

A commonly used architecture is to sandwich the liquid crystal between a layer of indium tin oxide (indium tin oxide, ITO) electrode and a layer of metal reflector pixel array to form a sandwich-like structure. A liquid crystal on silicon array phase modulator based on this architecture is usually referred to as a liquid crystal on silicon (liquid crystal on silicon, LCoS) or an LCoS-spatial light modulator (spatial light modulator, SLM) for short. An LCoS-based optical wavelength selective switch is one of core components of a wavelength selective switch (wavelength selective switch, WSS), and can implement a wavelength cross-connect function. An important step of implementing such a function is to modulate a two-dimensional array of an LCoS liquid crystal display. The LCoS includes millions of pixels. A main method for modulating the LCoS is to adjust phases of different pixels of the LCoS. The phase of the pixel depends on a voltage loaded on the pixel.

In practical application of the WSS, polarization in two directions usually needs to be modulated. A current solution is mainly to split a beam of light in any polarization direction into two beams with perpendicular polarizations by using a polarization beam splitting component, then polarization of one beam is converted to be parallel to polarization of the other beam by using a half-wave plate (half-wave plate, HWP) or a quarter-wave plate (quarter-wave plate, QWP) and a reflector, and then the beams are incident to an LCoS. However, in this manner, because an additional device is added, an optical path becomes complex. This hinders evolution of the WSS toward a large port and a small size, and increases system costs. Therefore, how to implement a polarization-independent LCoS device is of great research significance.

SUMMARY

Embodiments of this application provide a liquid crystal on silicon and a wavelength selective switch, to implement a polarization-independent LCoS device, and further reduce a second-order crosstalk problem that exists due to a polarization-unconverted residual, thereby ensuring application of the LCoS.

According to a first aspect, a liquid crystal on silicon is provided, used in a wavelength selective switch. The liquid crystal on silicon includes: a first panel and a second panel that are oppositely disposed; a liquid crystal layer, located between the first panel and the second panel; a drive circuit, configured to generate an electric field to control deflection of a liquid crystal in the liquid crystal layer; two layers of alignment films, where the two layers of alignment films are respectively located on two opposite sides of the liquid crystal layer; a reflector layer, located above the first panel, and configured to reflect a beam; and a polarization conversion layer, located above the reflector and below the two alignment layers, and configured to perform polarization conversion on a beam passing through the liquid crystal layer, where the polarization conversion layer includes at least two types of metasurface microstructures, and the at least two types of metasurface microstructures are periodically and alternately arranged.

The metasurface structure including the at least two types of microstructures can implement different modulation effects on polarization-converted light and polarization-unconverted light, so that the polarization-unconverted light passing through the LCoS can deviate from the polarization-converted light, thereby reducing second-order crosstalk impact caused by the polarization-unconverted light on the polarization-converted light.

In a possible design, the liquid crystal on silicon has N pixel areas, the reflector layer includes N reflectors that are in one-to-one correspondence with the N pixel areas, and N is a positive integer; and the N reflectors are in one-to-one correspondence with N groups of metasurface microstructures, and one group of metasurface microstructures includes one type of metasurface microstructures.

According to this design, the polarization-unconverted light can be more accurately processed, so that second-order crosstalk impact caused by the polarization-unconverted light on the polarization-converted light can be better reduced.

In a possible design, a beam obtained through polarization conversion includes polarization-converted light and polarization-unconverted light; and the liquid crystal on silicon has the N pixel areas, the drive circuit has a first voltage control value in a first pixel area and has a second voltage control value in a second pixel area, the second pixel area is a pixel area adjacent to the first pixel, and the first voltage control value and the second voltage control value are determined based on phase modulation values of a first-type metasurface microstructure and a second-type metasurface microstructure.

The liquid crystal layer performs phase compensation for phase modulation, so that after the polarization-converted light passes through the LCoS, an incident phase can be restored, thereby reducing impact on the polarization-converted light.

Based on the foregoing design, in a possible embodiment, the first voltage control value includes phase compensation for a first phase modulation value, and the first phase modulation value indicates a phase modulation value of the first-type microstructure for the polarization-converted light; and the second voltage control value includes phase compensation for a second phase modulation value, and the second phase modulation value indicates a phase modulation value of the second-type microstructure for the polarization-converted light.

Based on the foregoing design, in another possible embodiment, the polarization conversion layer includes two types of metasurface microstructures; and the second voltage control value includes phase compensation for a third phase modulation value, and the third phase modulation value indicates a sum of a first phase modulation value of the first-type microstructure for the polarization-converted light and a second phase modulation value of the second-type microstructure for the polarization-converted light.

In a possible design, the metasurface microstructure is a microstructure in a shape of an elliptic cylinder, and different types of metasurface microstructures have different sizes.

According to a second aspect, another liquid crystal on silicon is further provided, used in a wavelength selective switch. The liquid crystal on silicon includes: a first panel and a second panel that are oppositely disposed; a liquid crystal layer, located between the first panel and the second panel; a drive circuit, configured to generate an electric field to control deflection of a liquid crystal in the liquid crystal layer; two layers of alignment films, where the two layers of alignment films are respectively located on two opposite sides of the liquid crystal layer; a reflector layer, located above the first panel, and configured to reflect a beam; a polarization conversion layer, located above the reflector and below the two alignment layers, and configured to perform polarization conversion on a beam passing through the liquid crystal layer, where a beam obtained through polarization conversion includes polarization-converted light and polarization-unconverted light; and a phase film layer, located above the reflector, and configured to perform same phase modulation on the polarization-converted light and the polarization-unconverted light.

In the liquid crystal on silicon, considering that the polarization-unconverted light has a twofold optical path length compared with the polarization-converted light, an additional pre-added phase in a dispersion direction is introduced by using the phase film, and the phase is compensated by using a phase diagram, so that second-order crosstalk caused by the polarization-unconverted light can be reduced. In addition, the structure features easy processing.

In a possible design, the phase film is a high-frequency phase film. In a possible design, the high-frequency phase film is a sinusoidal grating phase film, a triangular wave phase film, or a square wave phase film.

According to a third aspect, an embodiment of this application further provides a wavelength selective switch, which may include the liquid crystal on silicon described in the first aspect or any possible design of the first aspect, or may include the liquid crystal on silicon described in the second aspect or any possible design of the second aspect.

The wavelength selective switch in the third aspect includes the liquid crystal on silicon in the designs in the first aspect, and therefore has the technical effects that can be brought by the designs in the first aspect; or includes the liquid crystal on silicon in the designs in the second aspect, and therefore has the technical effects that can be brought by the designs in the second aspect. Details are not described herein again.

BRIEF DESCRIPTION OF DRAWINGS

FIG. 1 is a diagram of a structure of a wavelength selective switch applicable to an embodiment of this application;
FIG. 2 is a diagram of a structure of a liquid crystal on silicon in the wavelength selective switch shown in FIG. 1;
FIG. 3 is a diagram of liquid crystal rotation in the liquid crystal on silicon shown in FIG. 2;
FIG. 4 is a diagram of a structure of a liquid crystal on silicon;
FIG. 5 is a diagram of a structure of another liquid crystal on silicon;
FIG. 6 is a diagram of a possible system architecture of a WSS according to an embodiment of this application;
FIG. 7 is a diagram 1 of a structure of a PI-LCoS according to an embodiment of this application;

FIG. 8 is a diagram of a structure of a metasurface structure according to an embodiment of this application;

FIG. 9 is a diagram 2 of a structure of a PI-LCoS according to an embodiment of this application;

FIG. 10 is a diagram 3 of a structure of a PI-LCoS according to an embodiment of this application; and

FIG. 11 is a diagram 4 of a structure of a PI-LCoS according to an embodiment of this application.

DESCRIPTION OF EMBODIMENTS

The following describes technical solutions in embodiments of this application in detail with reference to the accompanying drawings in embodiments of this application.

An LCoS is widely used in various scenarios, is one of key technologies of display devices such as a projector and a projection television, and plays an important role in application scenarios such as a WSS as a phase modulation device. Especially, with development of optical network communication, the WSS has an increasing application market, and a WSS with lower costs and higher performance is more urgently needed.

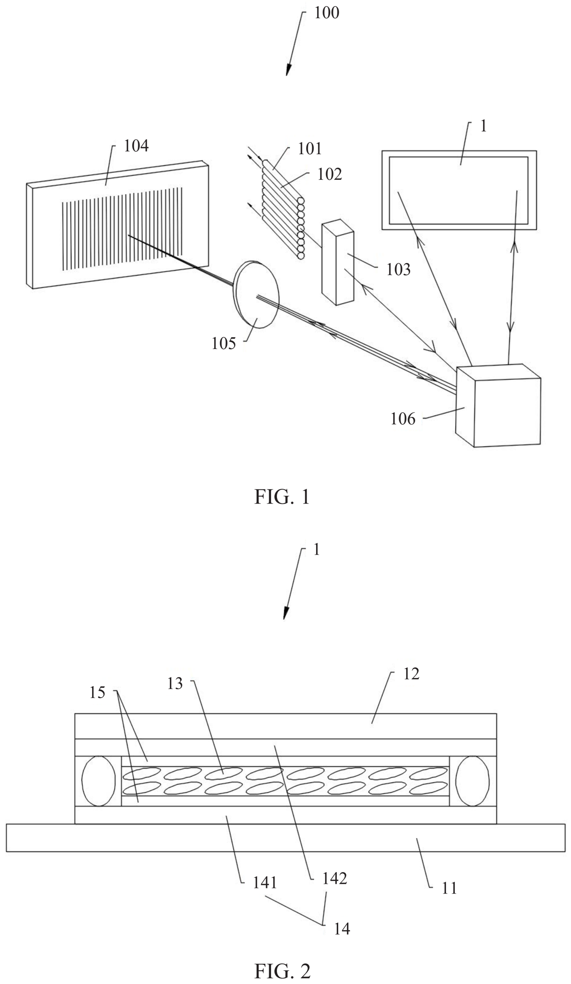

In an example, FIG. 1 is a diagram of a structure of a wavelength selective switch (wavelength selective switch, WSS) 100 applicable to an embodiment of this application. The wavelength selective switch 100 may be used in a reconfigurable optical add-drop multiplexer (reconfigurable optical add-drop multiplexer, ROADM). The wavelength selective switch 100 includes a liquid crystal on silicon 1. The liquid crystal on silicon 1 (liquid crystal on silicon, LCoS) is used as an optical switching engine of the wavelength selective switch 100, and is used to achieve a phase modulation effect, to independently control diffraction and deflection directions of beams incident to different areas of the liquid crystal on silicon 1.

The wavelength selective switch 100 may further include at least one input port 101 (for example, an input optical fiber), at least one output port group corresponding to the input port 101, a polarization conversion unit 103, a wavelength division demultiplexer 104 (for example, a diffraction grating), and a lens 105. Each output port group includes at least two output ports 102 (for example, output optical fibers). As shown in FIG. 1, a beam transmission path in the figure is a reversible path. A multi-wavelength signal forms an input beam through the input port 101. The polarization conversion unit 103 converts the input beam into linearly polarized light corresponding to a working polarization state of the liquid crystal on silicon 1. The linearly polarized light is incident to the wavelength division demultiplexer 104, the wavelength division demultiplexer 104 disperses wavelengths at different angles, and then the lens 105 changes dispersed beams into parallel beams to be incident to different positions of the liquid crystal on silicon 1. The beams of different wavelengths are focused on different areas on the liquid crystal on silicon 1 and are diffracted and deflected, the diffracted beams are restored to an original polarization state by using the polarization conversion unit 103, and the beams of different wavelengths are coupled to respective target output ports 102. Because respective diffraction and deflection directions of the beams of different wavelengths are separately controlled in the different areas on the liquid crystal on silicon 1, the liquid crystal on silicon 1 can switch any combination of wavelengths to any output port 102. The wavelength selective switch 100 further includes a reflector 106, and the reflector 106 is configured to reflect a light ray.

In addition to the foregoing structural units, the wavelength selective switch may further include a controller or a processor, configured to selectively configure a bit sequence to drive a pixel in the liquid crystal on silicon, so as to control an optical output in a port direction. The controller or the processor may be implemented by using hardware, software, firmware, or any combination thereof. For example, the controller or the processor may use one or more processors, a digital signal processor, an application-specific integrated circuit, a field programmable gate array, discrete logic, or any combination thereof. When the controller or the processor is partially implemented by using software, a device may store computer-executable instructions for the software in a suitable non-transitory computer-readable storage medium, and may use one or more processors in hardware to execute the instructions to run the technical solutions of the present invention.

FIG. 2 is a diagram of a physical structure of the foregoing liquid crystal on silicon. The liquid crystal on silicon may be used in the wavelength selective switch 100. The liquid crystal on silicon 1 may be configured to diffract an incident beam in a linear polarization state to form a deflected beam. The liquid crystal on silicon 1 is a polarization sensitive device, and can work in only one polarization direction (that is, a working polarization direction), and a polarization direction of the incident beam is the working polarization direction of the liquid crystal on silicon 1. The liquid crystal on silicon 1 includes a first panel 11, a second panel 12, a liquid crystal layer 13, a drive circuit 14, and two layers of alignment films (alignment film) 15. The first panel 11 and the second panel 12 are oppositely disposed. The first panel 11 is parallel to the second panel 12. The first panel 11 may be a silicon backplane (silicon backplane), and the second panel 12 may be a translucent glass substrate (glass substrate). The liquid crystal layer 13 is located between the first panel 11 and the second panel 12, and includes many liquid crystal molecules. The liquid crystal molecules deflect when a voltage is loaded at an electrode layer. The drive circuit 14 is configured to generate an electric field to control deflection of a liquid crystal in the liquid crystal layer 13. The two layers of alignment films 15 are respectively located on two opposite sides of the liquid crystal layer 13. To be specific, one of the alignment films 15 is located between the liquid crystal layer 13 and the first panel 11, and the other of the alignment films 15 is located between the liquid crystal layer 13 and the second panel 12. The alignment film 15 is configured to allow the liquid crystal in the liquid crystal layer 13 to have an initial orientation.

In an example, the drive circuit 14 includes a first electrode layer 141 and a second electrode layer 142. The first electrode layer 141 is located between the liquid crystal layer 13 and the first panel 11. The second electrode layer 142 is located between the liquid crystal layer 13 and the second panel 12. The first electrode layer 141 and the second electrode layer 142 may be indium tin oxide (indium tin oxide, ITO) electrode layers. Specifically, the first electrode layer 141 is formed on a side that is of the first panel 11 and that faces the liquid crystal layer 13, the second electrode layer 142 is formed on a side that is of the second panel 12 and that faces the liquid crystal layer 13, and the two layers of alignment films 15 are located between the first electrode layer 141 and the second electrode layer 142. When the first electrode layer 141 and the second electrode layer 142 are energized, the deflection of the liquid crystal in the liquid crystal layer 13 is controlled in a vertically-aligned (vertically-aligned, VA) drive manner.

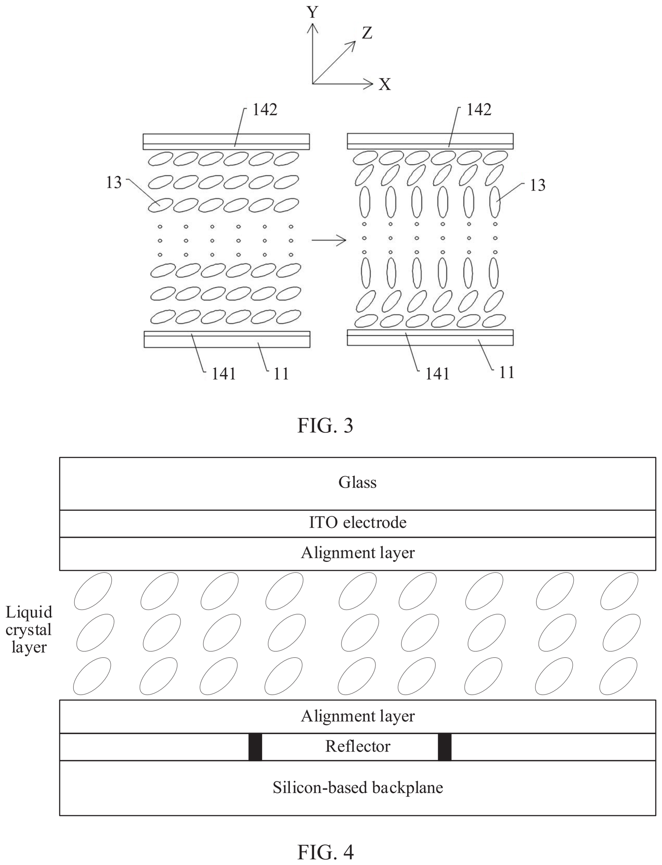

Refer to FIG. 2 and FIG. 3 together. When voltages are loaded on the first electrode layer 141 and the second electrode layer 142, to form an electric field between the first electrode layer 141 and the second electrode layer 142, the liquid crystal in the liquid crystal layer 13 deflects (a deflection plane is an XY plane in FIG. 3, that is, a plane perpendicular to the first panel 11), where X represents a wavelength direction (which may be alternatively referred to as a "dispersion direction" in embodiments of this application), Y represents a phase period $2\pi$ (which may be alternatively understood as a direction of an optical path), and Z represents a port direction (which may be alternatively referred to as a "switching direction", an "exchange direction", or the like). In an example, the liquid crystal in the liquid crystal layer 13 deflects from a state in the left diagram in FIG. 3 to a state in the right diagram in FIG. 3. To be specific, a long axis of the liquid crystal deflects from a direction approximately parallel to the first panel 11 to a direction approximately perpendicular to the first panel 11. This is used as an example for description in this application. In another embodiment, a long axis of the liquid crystal in the liquid crystal layer 13 may alternatively deflect from a direction approximately perpendicular to the first panel 11 to a direction approximately parallel to the first panel 11. Because the liquid crystal is a birefringent material, the deflection of the liquid crystal may bring a change in an equivalent refractive index, thereby achieving a phase modulation effect. In addition, a deflection angle of the liquid crystal molecule is related to magnitudes of the voltages loaded on the first electrode layer 141 and the second electrode layer 142. Therefore, different phase modulation amounts may be implemented by loading different voltages. This is also a principle of performing phase modulation on a pixel in a two-dimensional array of the liquid crystal on silicon.

Due to photoelectric characteristics of the liquid crystal, common LCoS devices are polarization-dependent. Only light whose polarization direction is parallel to an orientation of the liquid crystal molecule can be modulated. However, in practical application of the WSS, polarization in two directions usually needs to be modulated. A current solution is mainly to split a beam of light in any polarization direction into two beams with perpendicular polarizations by using a polarization beam splitting component, then polarization of one beam is converted to be parallel to polarization of the other beam by using a half-wave plate (half-wave plate, HWP) or a quarter-wave plate (quarter-wave plate, QWP) and a reflector, and then the beams are incident to an LCoS. In this manner, because an additional device is added, an optical path becomes complex. This hinders evolution of the WSS toward a large port and a small size, and increases system costs. Therefore, how to implement a polarization-independent LCoS device becomes a crucial problem.

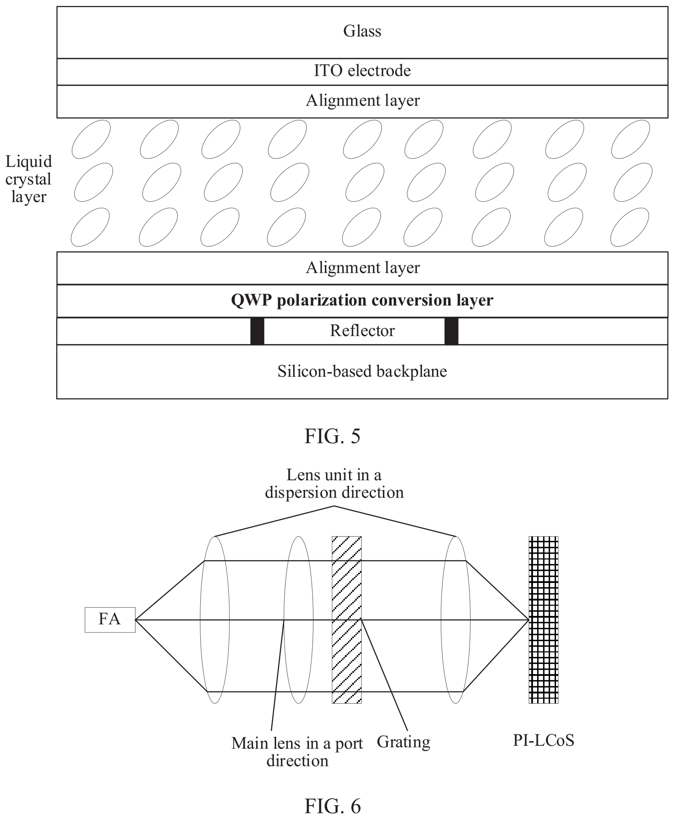

In a possible implementation, FIG. 4 is a diagram of a physical structure of another liquid crystal on silicon. In a structure usually used for a common LCoS, a liquid crystal is sandwiched between a layer of ITO electrode and a layer of metal reflector pixel array, to form a sandwich-like structure shown in FIG. 4. In another possible implementation, FIG. 5 is a diagram of a physical structure of another liquid crystal on silicon. A difference from the diagram of the liquid crystal on silicon shown in FIG. 4 lies in that a layer of sub-wavelength grating structure or metasurface structure or a polymer is added above a reflector layer included in the liquid crystal on silicon shown in FIG. 4, to form a QWP polarization conversion layer, and an optical axis of the QWP is 45 degrees to an orientation of the LCoS. According to the structure shown in FIG. 5, incident polarized light is converted into vertically polarized light by the QWP after being reflected.

In a possible example, when light that can be modulated by the liquid crystal is s light, incident light with s polarization can be modulated when passing through the liquid crystal, but after the incident light is converted into p light by the QWP polarization conversion layer, reflected p light cannot be modulated by the liquid crystal. It may be understood that optical path modulation for the incident light is phase modulation of a single liquid crystal height.

In another possible example, when light that can be modulated by the liquid crystal is s light, incident light with p polarization cannot be modulated when passing through the liquid crystal, but after the incident light is converted into s light by the QWP polarization conversion layer, reflected s light can be modulated by the liquid crystal. It may be understood that optical path modulation for the incident light is also phase modulation of a single liquid crystal height. It may be understood that incident light in any polarization state undergoes phase modulation of a single liquid crystal height when passing through the LCoS structure shown in FIG. 5. Therefore, polarization-independent phase modulation is implemented.

However, due to factors such as micro-nano structure processing, wavelength bandwidth required by the WSS, and a micro-nano structure design, an actual QWP polarization conversion layer in the LCoS structure shown in FIG. 5 cannot completely convert incident light into reflected light with vertical polarization, but a part of polarization-unconverted residual exists, and this part of residual causes a second-order crosstalk problem in application of the WSS. For example, when light that can be modulated by the liquid crystal is s light, and the incident light is also s light, after the incident light passes through the QWP polarization conversion layer, there may be a part of polarization-unconverted s light that can still be modulated by the liquid crystal after being reflected. Optical path modulation for this part of s light is phase modulation of a twofold liquid crystal height. As a result, a second-order crosstalk problem exists.

In view of this, an embodiment of this application provides an LCoS. In the LCoS, an additional phase (which may be referred to as a "pre-added phase" in embodiments of this application) is pre-added in a dispersion direction based on a metasurface design or a structure such as a phase film. Based on the pre-added phase, a high-frequency deflection or scattering phase is formed for polarization-unconverted light to make energy of the polarization-unconverted light deviate from a crosstalk order, to avoid crosstalk caused by the polarization-unconverted light on polarization-converted light, thereby suppressing second-order crosstalk in a port direction.

FIG. 6 is a diagram of a possible system architecture of a WSS according to an embodiment of this application. The system may include at least a fiber array (fiber array, FA), two lenses in a dispersion direction, a main lens in a port direction, a grating, and a polarization-independent (polarization-independent, PI)-LCoS. After being shaped by the lens unit in the dispersion direction, a beam from a port of the FA is incident to the PI-LCoS. In addition, light of different wavelengths in the beam may be split by the grating and then incident to different areas on the PI-LCoS. Then, a corresponding phase diagram is loaded in each area on the PI-LCoS, so that light on a channel of a specific wavelength is deflected to a specified port after passing through the main lens in the port direction, thereby implementing wavelength switching.

In some other possible embodiments, in some conventional WSS structures, an additional polarization optical splitting component is further added to the right of an FA or the left of a PI-LCoS to first split an incident polarized light ray into two beams of light with orthogonal polarization, and then polarization of the two beams of light is adjusted into light parallel to an orientation of a liquid crystal by using an HWP or a QWP and a reflector. Then, the two beams of light are incident to different areas on the PI-LCoS, so that modulation for two types of polarization can be implemented. However, after the PI-LCoS shown in FIG. 6 is introduced into the WSS structure, the polarization optical splitting component is removed from the WSS architecture, and the PI-LCoS can be more effectively used, thereby implementing a WSS structure with lower costs and a smaller size. As a core device in a ROADM, the WSS can dynamically add or drop a service wavelength through remote reconfiguration without manual fiber adjustment, to achieve wavelength reconfiguration for a wavelength division multiplexing (wavelength division multiplexing, WDM) system, thereby implementing flexible service scheduling. This is of great significance in implementing all-optical networking, flexible scheduling of a service with an ultralarge capacity, and completely transparent service transmission.

The PI-LCoS provided in embodiments of this application may be used in a WSS without a polarization optical splitting component, for example, the WSS system architecture shown in FIG. 6.

In an optional implementation, the pre-added phase in the dispersion direction of the PI-LCoS provided in embodiments of this application may be implemented by using a structure of a metasurface polarization conversion layer. The metasurface structure provided in embodiments of this application may include at least two types of microstructures, so that deviation of polarization-unconverted light can be implemented by using a gradient phase, thereby reducing second-order crosstalk. For example, refer to content described in the following Embodiment 1 and Embodiment 2.

In another optional implementation, the pre-added phase in the dispersion direction of the PI-LCoS provided in embodiments of this application may be implemented by using a structure of a phase film. Due to a characteristic that polarization-unconverted light has a twofold optical path length and polarization-converted light has a single optical path length, deviation of the polarization-unconverted light can be implemented by using the phase film, thereby reducing second-order crosstalk. For example, refer to content described in the following Embodiment 3.

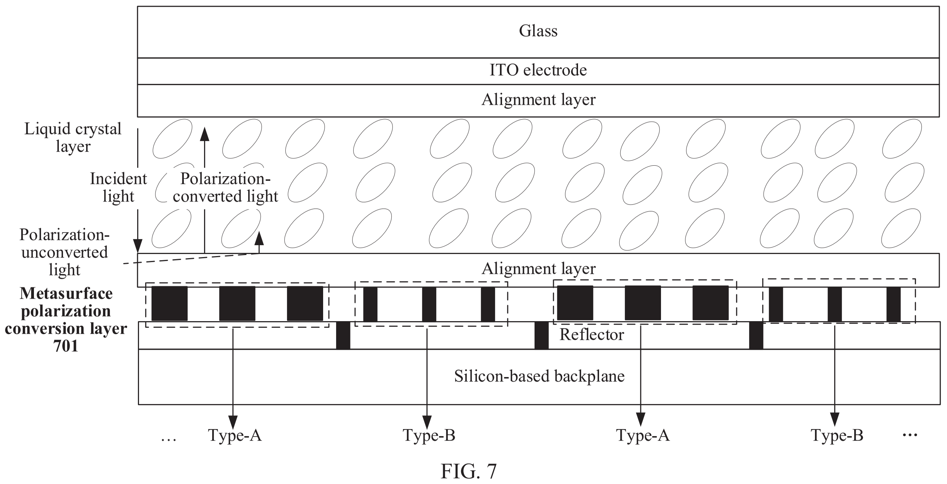

FIG. 7 is a diagram of a structure of a PI-LCoS according to an embodiment of this application. The PI-LCoS may include at least glass, an ITO electrode, two alignment layers, a liquid crystal layer, a reflector, a silicon-based backplane, and a metasurface polarization conversion layer 701. It may be understood that the metasurface polarization conversion layer 701 indicates that the QWP polarization conversion layer shown in FIG. 5 uses a metasurface structure.

There is a layer of ITO electrode transparent to a selected wavelength on a surface of the glass. The ITO electrode and a metal reflector electrode of a pixel array at a layer above the silicon-based backplane may form a pair of voltage-driven electrodes acting on a liquid crystal; and after being aligned by using the alignment layer, the liquid crystal layer is sandwiched between the pair of electrodes. In some possible embodiments, corresponding orientation modulation can be performed on a liquid crystal above a position of each pixel in the pixel array by adjusting a voltage value of each pixel, so that phase adjustment for each pixel can be implemented. Each pixel corresponds to one reflector.

The metasurface polarization conversion layer 701 is located above the metal reflector of the pixel array. The metasurface polarization conversion layer 701 shown in FIG. 7 may use a metasurface structure, and the structure may have the following phase constraint conditions.

   (1) The metasurface structure may include two types of microstructures, and have a periodic arrangement manner of ABAB shown in FIG. 7.

In some possible embodiments, a metasurface on each column of the pixel array in a dispersion direction has a type-A microstructure or a type-B microstructure. This may also be understood as that a system period is a width of two pixels in the dispersion direction.

In some other embodiments, a correspondence between the metasurface structure in the metasurface polarization conversion layer 701 and the pixel array is not limited.

The metasurface structure including two types of microstructures can implement different modulation effects on polarization-converted light and polarization-unconverted light, so that the polarization-unconverted light passing through the LCoS can deviate from the polarization-converted light, thereby reducing second-order crosstalk impact caused by the polarization-unconverted light on the polarization-converted light.

(2) Each of the type-A metasurface microstructure and the type-B metasurface microstructure has an optical axis that forms an included angle of 45 degrees with an orientation of the liquid crystal, so that incident light has a phase difference of about 180 degrees after two components whose polarizations are respectively parallel to and perpendicular to the metasurface optical axis are reflected, and most of the incident light is converted to having another polarization that is perpendicular to the polarization and then reflected, thereby achieving a polarization conversion effect.

(3) The type-A metasurface microstructure and the type-B metasurface microstructure have different phase modulation for reflected light. In addition, as shown in FIG. 7, after polarization conversion is performed on incident light, there is polarization-converted light and polarization-unconverted light.

For example, phase modulation of the type-A metasurface microstructure for the polarization-converted light may be represented as $\varphi_0^A(y)$, phase modulation of the type-A metasurface microstructure for the polarization-unconverted light may be represented as $\varphi_1^A(y)$, phase modulation of the type-B metasurface microstructure for the polarization-converted light may be represented as $\varphi_0^B(y)$, and phase modulation of the type-B metasurface microstructure for the polarization-unconverted light may be represented as $\varphi_1^B(y)$. In an optional embodiment, a phase difference of the polarization-converted light may satisfy $0 \leq \left| \varphi_0^A(y) - \varphi_0^B(y) \right| < 0.5\pi$, and a phase difference of the polarization-unconverted light may satisfy $0.5\pi \leq \left| \varphi_1^A(y) - \varphi_1^B(y) \right| < 1.5\pi$.

(4) Considering that the phase modulation of the type-A metasurface microstructure for the polarization-converted light may be represented as $\varphi_0^A(y)$, voltage control may be performed on the liquid crystal, to implement compensation for the polarization-converted light.

In an optional embodiment, voltage control on the liquid crystal in a pixel column in which the type-A metasurface structure is located may be represented as $\varphi(x) - \varphi_0^A(y)$, to implement phase compensation for phase modulation of the type-A metasurface microstructure. Similarly, voltage control on the liquid crystal in a pixel column in which the type-B metasurface structure is located may be represented as $\varphi(x) - \varphi_0^B(y)$, to implement phase compensation for phase modulation of the type-B metasurface microstructure.

For example, after passing through the metasurface polarization conversion layer 701 shown in FIG. 7, the polarization-converted light may be represented by the following formula 1-1:

$$\varphi_0(x, y) = \varphi(x) - \varphi_0^A(y) + \varphi_0^A(y) = \varphi(x) \qquad \text{Formula 1-1}$$

For example, after passing through the metasurface polarization conversion layer 701 shown in FIG. 7, the polarization-unconverted light may be represented by the following formula 1-2:

$$\varphi_1(x, y) = 2\left[ \varphi(x) - \varphi_0^A(y) + \varphi_1^A(y) \right] = 2\varphi(x) - 2\varphi_0^A(y) + 2\varphi_1^A(y) \qquad \text{Formula 1-2}$$

It can be learned from the foregoing formula 1-1 and formula 1-2 that a phase of the polarization-converted light passing through the metasurface polarization conversion layer 701 may be restored to $\varphi(x)$, and total phase modulation of the polarization-unconverted light is $2\varphi(x) - 2\varphi_0^A(y) + 2\varphi_1^A(y)$. This may be understood as that for the polarization-unconverted light, a phase of $2\varphi_0^A(y) - 2\varphi_1^A(y)$ is still retained on the basis of second-order crosstalk, so that energy at a crosstalk order deviates from the dispersion direction by a zero-order, and deviation of the polarization-unconverted light relative to the polarization-converted light is implemented, thereby reducing the second-order crosstalk.

In another optional embodiment, voltage control on the liquid crystal in a pixel column in which the type-A metasurface structure is located may be alternatively represented as φ'(x). In this case, voltage control on the liquid crystal in a pixel column in which the type-B metasurface structure is located may be represented as $\varphi'(x) - \varphi_0^B(y) + \varphi_0^A(y)$. It may be understood that, when a selected metasurface structure satisfies $\varphi_0^A(y) = \varphi_0^B(y)$, phase compensation does not need to be performed, and a phase diagram is normally loaded.

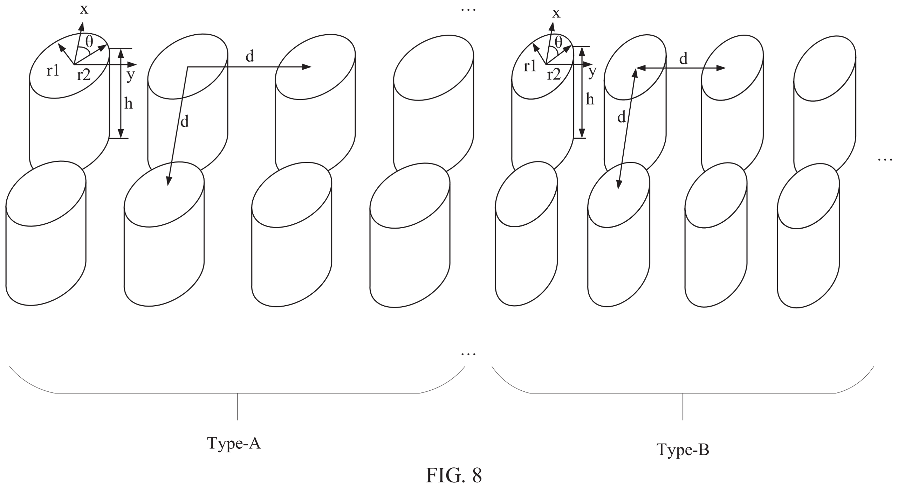

In some possible embodiments, FIG. 8 is a diagram of a structure of a metasurface structure according to an embodiment of this application. For example, the metasurface structure may be in a shape of an elliptic cylinder, and is made of a silicon material.

Optionally, a period of the type-A metasurface microstructure may be d=850 nm, a height may be h=400 nm, an included angle between an optical axis and an X direction is 45°, and in a Y direction, every four structures may form one type and are located in a same column of the pixel array. In a possible embodiment, a long axis and a short axis of the type-A structure may be implemented as follows: r1=140 nm, and r2=270 nm.

Optionally, a period of the type-B metasurface microstructure may also be d=850 nm, a height may also be h=400 nm, an included angle between an optical axis and an X direction is 45°, and in a Y direction, every four structures may form one type and are located in a same column of the pixel array. In a possible embodiment, a long axis and a short axis of the type-B structure may be implemented as follows: r1=170 nm, and r2=250 nm.

It can be learned from FIG. 8 that the metasurface structure may be formed by periodically arranging a plurality of type-A microstructures and a plurality of type-B microstructures in the Y direction, and may be extended in the X direction.

In the foregoing optional embodiment, an electromagnetic simulation result of a phase difference between the type-A metasurface microstructure and the type-B metasurface microstructure for the polarization-converted light is $\left|\varphi_0^A(y) - \varphi_0^B(y)\right| \approx 0.1\pi$, and an electromagnetic simulation result of a phase difference for the polarization-unconverted light is $\left|\varphi_1^A(y) - \varphi_1^B(y)\right| \approx \pi$. In addition, according to the electromagnetic simulation results, even if no liquid crystal compensation is added, an additional insertion loss introduced by this structure is only about 0.4 dB. However, isolation of the second-order crosstalk can be improved by more than 30 dB, which exceeds a 25-dB isolation requirement in application of the WSS. When liquid crystal compensation is added, the insertion loss can be further optimized to about 0.2 dB.

It should be noted that FIG. 8 is merely an example of a possible metasurface structure. A quantity of type-A microstructures and a quantity of type-B microstructures may be determined based on a period, a microstructure size, an LCoS size, and the like. This is not limited in this application.

According to the metasurface structure provided in the foregoing Embodiment 1, parameter design is performed on the metasurface structure shown in FIG. 8, the type-A metasurface structure and the type-B metasurface structure are periodically arranged, and the type-A metasurface structure and the type-B metasurface structure have different modulation effects for the polarization-converted light and the polarization-unconverted light, so that second-order crosstalk caused by existence of the polarization-unconverted light can be effectively reduced.

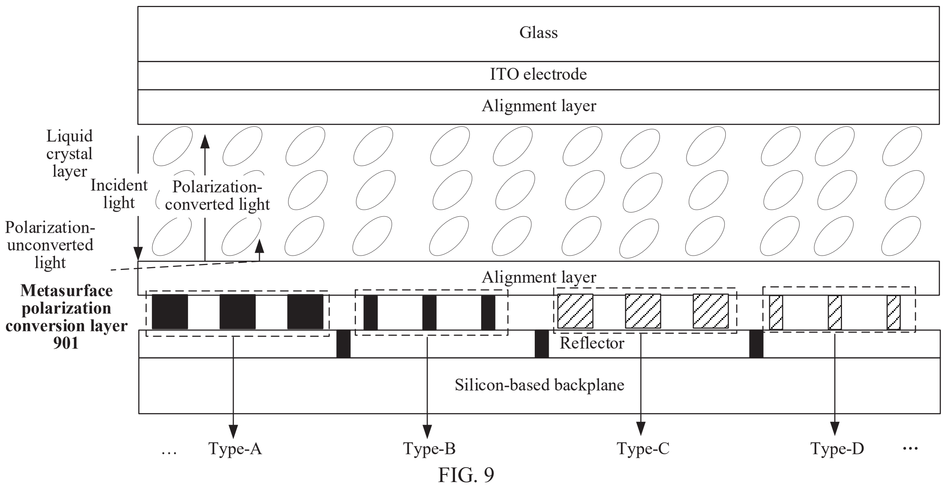

FIG. 9 is a diagram of a structure of a PI-LCoS according to an embodiment of this application. The PI-LCoS may include at least glass, an ITO electrode, two alignment layers, a liquid crystal layer, a reflector, a silicon-based backplane, and a metasurface polarization conversion layer 901. It may be understood that the metasurface polarization conversion layer 901 indicates that the QWP polarization conversion layer shown in FIG. 5 uses a metasurface structure. A part that is the same as or similar to that in FIG. 7 is not described herein again. A difference lies in that microstructures of four types including a type A, a type B, a type C, and a type D shown in FIG. 9 may be alternatively used for the metasurface polarization conversion layer 901, and are periodically arranged. It may be understood that, in this embodiment, every four columns of pixels form one period in a dispersion direction.

A phase constraint condition of the metasurface polarization conversion layer 901 may include: Phase differences between metasurface structures of the four types A, B, C, and D for polarization-converted light are all less than 0.5π; and a phase for polarization-unconverted light forms a gradient from 0 to 2π, which may also be understood as a blazed grating phase in the dispersion direction, so that the polarization-unconverted light can be deflected to a minus one order in the dispersion direction, to reduce second-order crosstalk.

It should be noted that although FIG. 7 shows that the metasurface structure includes two types of microstructures, and FIG. 9 shows that the metasurface structure includes four types of microstructures, a quantity of types of metasurface structures is not limited in embodiments of this application. For example, microstructures of more types, for example, three types, five types, or more, may be included. In addition, the phase for the polarization-unconverted light provided in this embodiment of this application may not be limited to the blazed grating phase, but may be another high-frequency phase change such as a sinusoidal grating phase, so that energy of the polarization-unconverted light deviates from the dispersion direction by a zero-order.

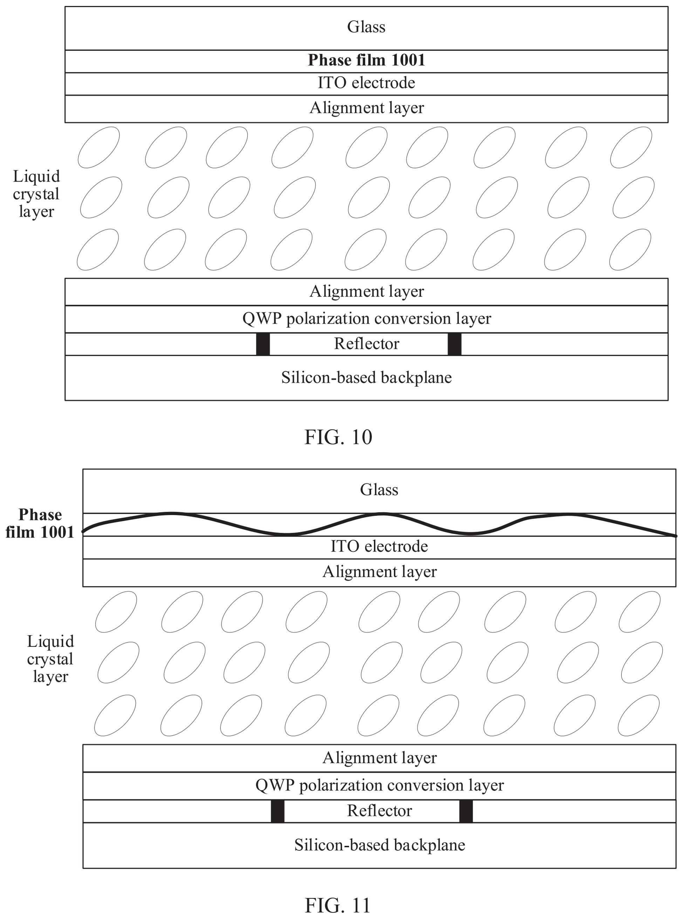

FIG. 10 is a diagram of a structure of a PI-LCoS according to an embodiment of this application. In addition to including various structures shown in FIG. 5, in the PI-LCoS, a layer of phase film may be further inserted at any position above the metal reflector of the pixel array. For example, FIG. 10 shows an example of inserting the phase film between the glass and the ITO electrode. Alternatively, for example, the phase film may be inserted at a position above the reflector (or below the QWP polarization conversion layer), above the QWP polarization conversion layer, or below the ITO electrode. The phase film has the same phase modulation for polarization-converted light and polarization-unconverted light. If phase modulation of the phase film for the polarization-converted light is represented as $\Delta\varphi_0(y)$, and phase modulation of the phase film for the polarization-unconverted light is represented as $\Delta\varphi_1(y)$, $\Delta\varphi_0(y){=}\Delta\varphi_1(y)$. In addition, the structure has the following phase constraint condition: A phase in a dispersion direction approximately continuously changes and has a high frequency; and a phase difference between adjacent pixels in each column should be less than $0.5\pi$, to facilitate compensation for a liquid crystal.

Considering that a beam passes through the phase film twice, a phase that needs to be compensated for the liquid crystal should be twice a phase added by the phase film. Therefore, a control phase added to the liquid crystal may be adjusted to that shown in the following formula 2-1:

$$\varphi(x, y) = \varphi(x) - 2\Delta\varphi_0(y) \qquad \text{Formula 2-1}$$

It may be understood that, in this case, total phase modulation for the polarization-converted light is still $\varphi(x)$, and total phase modulation for the polarization-unconverted light changes to that shown in the following formula 2-2:

$$\varphi'(x, y) = 2\varphi(x) - 2\Delta\varphi_0(y) \qquad \text{Formula 2-2}$$

It may also be understood that a high-frequency phase of $-2\Delta\varphi_0(y)$ still remains in the dispersion direction, so that the polarization-unconverted light can deviate from the polarization-converted light, and impact of the polarization-unconverted light on the polarization-converted light can be reduced, thereby reducing second-order crosstalk.

In a possible embodiment, the phase film 1001 may be a sinusoidal grating phase film. For example, FIG. 11 is a diagram of a structure of a PI-LCoS according to an embodiment of this application. A sinusoidal grating phase film shown in FIG. 11 has a high transmittance for a selected wavelength, which may be expressed as the following formula 3-1:

$$\Delta\varphi(y) = 0.5\pi \sin y/T \qquad \text{Formula 3-1}$$

T is greater than a size of one pixel.

A liquid crystal is controlled by using a voltage, and an adjusted phase is shown in the following formula 3-2:

$$\varphi(x, y) = \varphi(x) - \pi \sin y/T \qquad \text{Formula 3-2}$$

Based on the foregoing formula 3-1 and the foregoing formula 3-2, considering that a beam passes through the phase film twice, after polarization-converted light passes through the liquid crystal with the phase shown in the formula 3-2 and passes through the sinusoidal grating phase film shown in the formula 3-1 twice, a total modulation phase is $\varphi(x)$.

Based on the foregoing formula 3-1 and the foregoing formula 3-2, considering that a beam passes through the phase film twice, total phase modulation of polarization-unconverted light is $2\varphi(x) - \pi \sin y/T$. This may be understood as that for the polarization-unconverted light, a sinusoidal grating phase in a dispersion direction is still retained on the basis of second-order crosstalk, so that energy at a crosstalk order deviates from the dispersion direction by a zero-order, and deviation of the polarization-unconverted light relative to the polarization-converted light is implemented, thereby reducing the second-order crosstalk.

It should be noted that, in some other possible embodiments, the phase film 1001 may alternatively be a grating phase film that is in another shape such as a triangular wave or a square wave and that has a continuously changing high-frequency phase.

It should be further noted that the QWP polarization conversion layer in Embodiment 3 may use the metasurface structure in Embodiment 1 or Embodiment 2, or may use a module that can implement a polarization conversion function, such as a metasurface structure with uniform microstructures, a sub-wavelength grating structure, or a polymer. This is not limited in this application.

In the structure provided in Embodiment 3, an additional pre-added phase in the dispersion direction is introduced by using the sinusoidal grating phase film, and then the phase is compensated by using a phase diagram, so that second-order crosstalk caused by the polarization-unconverted light can be reduced. In addition, the structure features easy processing.

**EP 4 715 457 A1**

An embodiment of this application further provides a WSS, including at least the liquid crystal on silicon described in the foregoing embodiments and the like. In an optional embodiment, the WSS may further include an input port, an output port, a polarization conversion unit, a wavelength division demultiplexer, a lens, a reflector, and the like. In another optional embodiment, the WSS may further include an FA, a lens unit in a dispersion direction, a main lens in a port direction, a grating, and the like.

An embodiment of this application further provides an optical communication device, including the liquid crystal on silicon described in the foregoing embodiments.

It should be noted that in descriptions of this application, "at least one" means one or more, and "a plurality of" means two or more. In view of this, in embodiments of this application, "a plurality of" may also be understood as "at least two". The term "and/or" describes an association relationship of associated objects, and indicates that three relationships may exist. For example, A and/or B may indicate the following three cases: Only A exists, both A and B exist, and only B exists. In addition, the character "/" generally indicates an "or" relationship between the associated objects, unless otherwise specified. In addition, it should be understood that in the descriptions of this application, words such as "first" and "second" are merely used for distinguishing, and cannot be understood as an indication or implication of relative importance or an indication or implication of a sequence.

It should be noted that, "coupling" in embodiments of this application may be understood as an electrical connection, and a coupling between two elements may be a direct coupling or an indirect coupling between the two elements. For example, that A is connected to B may mean that A is directly coupled to B, or mean that A is indirectly coupled to B through one or more other elements. For example, that A is coupled to B may mean that A is directly coupled to C, C is directly coupled to B, and A is coupled to B through C. In some scenarios, "coupling" may also be understood as connection.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, the term "for example" is used to represent giving an example, an illustration, or a description. Any embodiment or design scheme described as an "example" in this application should not be explained as being more preferred or having more advantages than another embodiment or design scheme. Alternatively, it may be understood that the term "for example" is used to present a concept in a specific manner, and does not constitute a limitation on this application.

It may be understood that various numbers in this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes. In addition, the terms "include", "have", and any variant thereof are intended to cover non-exclusive inclusion, for example, inclusion of a series of steps or units. A method, a system, a product, or a device is not necessarily limited to clearly listed steps or units, but may include other steps or units that are not clearly listed or that are inherent to the process, the method, the product, or the device.

Although this application is described with reference to specific features and embodiments, it is clear that various modifications and combinations may be made to this application without departing from the spirit and scope of this application. Correspondingly, this specification and the accompanying drawings are merely example descriptions of the solutions defined by the appended claims and are considered to cover any and all modifications, variations, combinations, or equivalents in the scope of this application.

It is clear that a person skilled in the art may make various modifications and variations to this application without departing from the spirit and scope of the present invention. Thus, this application is intended to cover these modifications and variations to embodiments of this application, provided that they fall within the scope of the claims of this application and their equivalent technologies.

**Claims**

1.  A liquid crystal on silicon, used in a wavelength selective switch, wherein the liquid crystal on silicon comprises:

    a first panel and a second panel that are oppositely disposed;
    a liquid crystal layer, located between the first panel and the second panel;
    a drive circuit, configured to generate an electric field to control deflection of a liquid crystal in the liquid crystal layer;
    two layers of alignment films, wherein the two layers of alignment films are respectively located on two opposite sides of the liquid crystal layer;
    a reflector layer, located above the first panel, and configured to reflect a beam; and

a polarization conversion layer, located above the reflector and below the two alignment layers, and configured to perform polarization conversion on a beam passing through the liquid crystal layer, wherein the polarization conversion layer comprises at least two types of metasurface microstructures, and the at least two types of metasurface microstructures are periodically and alternately arranged.

2. The liquid crystal on silicon according to claim 1, wherein the liquid crystal on silicon has N pixel areas, the reflector layer comprises N reflectors that are in one-to-one correspondence with the N pixel areas, and N is a positive integer; and

the N reflectors are in one-to-one correspondence with the N groups of metasurface microstructures, and one group of metasurface microstructures comprises one type of metasurface microstructures.

3. The liquid crystal on silicon according to claim 1 or 2, wherein a beam obtained through polarization conversion comprises polarization-converted light and polarization-unconverted light; and

the liquid crystal on silicon has the N pixel areas, the drive circuit has a first voltage control value in a first pixel area and has a second voltage control value in a second pixel area, the second pixel area is a pixel area adjacent to the first pixel, and the first voltage control value and the second voltage control value are determined based on phase modulation values of a first-type metasurface microstructure and a second-type metasurface microstructure.

4. The liquid crystal on silicon according to claim 3, wherein

the first voltage control value comprises phase compensation for a first phase modulation value, and the first phase modulation value indicates a phase modulation value of the first-type microstructure for the polarization-converted light; and

the second voltage control value comprises phase compensation for a second phase modulation value, and the second phase modulation value indicates a phase modulation value of the second-type microstructure for the polarization-converted light.

5. The liquid crystal on silicon according to claim 3, wherein the polarization conversion layer comprises two types of metasurface microstructures; and

the second voltage control value comprises phase compensation for a third phase modulation value, and the third phase modulation value indicates a sum of a first phase modulation value of the first-type microstructure for the polarization-converted light and a second phase modulation value of the second-type microstructure for the polarization-converted light.

6. The liquid crystal on silicon according to any one of claims 1 to 5, wherein the metasurface microstructure is a microstructure in a shape of an elliptic cylinder, and different types of metasurface microstructures have different sizes.

7. A liquid crystal on silicon, used in a wavelength selective switch, wherein the liquid crystal on silicon comprises:

a first panel and a second panel that are oppositely disposed;
a liquid crystal layer, located between the first panel and the second panel;
a drive circuit, configured to generate an electric field to control deflection of a liquid crystal in the liquid crystal layer;
two layers of alignment films, wherein the two layers of alignment films are respectively located on two opposite sides of the liquid crystal layer;
a reflector layer, located above the first panel, and configured to reflect a beam;
a polarization conversion layer, located above the reflector and below the two alignment layers, and configured to perform polarization conversion on a beam passing through the liquid crystal layer, wherein a beam obtained through polarization conversion comprises polarization-converted light and polarization-unconverted light; and
a phase film layer, located above the reflector, and configured to perform same phase modulation on the polarization-converted light and the polarization-unconverted light.

8. The liquid crystal on silicon according to claim 7, wherein the phase film is a high-frequency phase film.

9. The liquid crystal on silicon according to claim 8, wherein the high-frequency phase film is a sinusoidal grating phase film, a triangular wave phase film, or a square wave phase film.

**EP 4 715 457 A1**

10. A wavelength selective switch, comprising the liquid crystal on silicon according to any one of claims 1 to 6 or the liquid crystal on silicon according to any one of claims 7 to 9.

**12**

FIG. 1

FIG. 2

FIG. 3

FIG. 4

| Glass |
|---|
| ITO electrode |
| Alignment layer |

Liquid crystal layer

| Alignment layer |
|---|
| **QWP polarization conversion layer** |
| Reflector |
| Silicon-based backplane |

FIG. 5

Lens unit in a dispersion direction

FA

Main lens in a port direction    Grating    PI-LCoS

FIG. 6

FIG. 7

FIG. 8

FIG. 9

EP 4 715 457 A1

| Glass |
|---|
| **Phase film 1001** |
| ITO electrode |
| Alignment layer |

Liquid crystal layer

| Alignment layer |
|---|
| QWP polarization conversion layer |
| Reflector |
| Silicon-based backplane |

FIG. 10

| Glass |
|---|

Phase film 1001

| ITO electrode |
|---|
| Alignment layer |

Liquid crystal layer

| Alignment layer |
|---|
| QWP polarization conversion layer |
| Reflector |
| Silicon-based backplane |

FIG. 11

## INTERNATIONAL SEARCH REPORT

| International application No. |
| --- |
| **PCT/CN2024/072053** |

| A. | CLASSIFICATION OF SUBJECT MATTER |
| --- | --- |

G02F1/133(2006.01)i; G02F1/13(2006.01)i; G02F1/1335(2006.01)i

According to International Patent Classification (IPC) or to both national classification and IPC

| B. | FIELDS SEARCHED |
| --- | --- |

Minimum documentation searched (classification system followed by classification symbols)

IPC:G02F

Documentation searched other than minimum documentation to the extent that such documents are included in the fields searched

Electronic data base consulted during the international search (name of data base and, where practicable, search terms used)

CNABS: CNTXT; CNKI; VEN; USTXT; EPTXT; WOTXT: 华为, 硅基, 液晶, 波长, 开关, 偏振, 偏转, 无关, 不敏感, 不相关, 反射, 抑制, 压制, 降低, 串扰, 配向, 对准, 取向, 超构, 微结构, 超表面, 纳米, 微纳结构, 相位膜, 相位层, 相位片, 相位补偿, LCOS, Liquid crystal on silicon, Liquid crystal, WSS, wavelength selective switch, super-structure surface, metasurface, superstructure surface, super structure surface, polariz+, PI, phase compensat+, phase

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 116165820 A (HUAWEI TECHNOLOGIES CO., LTD.) 26 May 2023 (2023-05-26) description, paragraphs [0052]-[0126], and figures 1-13 | 1-10 |
| X | CN 116018549 A (MAO CHONGCHANG) 25 April 2023 (2023-04-25) description, paragraphs [0028]-[0050], and figures 1-5B | 1, 7-10 |
| A | CN 217085455 U (SHENZHEN AV-DISPLAY CO., LTD.) 29 July 2022 (2022-07-29) entire document | 1-10 |
| A | CN 112147817 A (SOUTHEAST UNIVERSITY) 29 December 2020 (2020-12-29) entire document | 1-10 |
| A | CN 1495490 A (KYONG TONGBANG DISPLAY SCIENCE) 12 May 2004 (2004-05-12) entire document | 1-10 |
| A | CN 112147812 A (SHENZHEN AV-DISPLAY CO., LTD.) 29 December 2020 (2020-12-29) entire document | 1-10 |

☑ Further documents are listed in the continuation of Box C.  ☑ See patent family annex.

| | |
| --- | --- |
| *   Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **19 February 2024** | **22 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/072053** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2023093121 A1 (ABDULHALIM, I.) 23 March 2023 (2023-03-23)<br>entire document | 1-10 |
| A | US 2020225418 A1 (HUAWEI TECHNOLOGIES CO., LTD.) 16 July 2020 (2020-07-16)<br>entire document | 1-10 |

Form PCT/ISA/210 (second sheet) (July 2022)

## INTERNATIONAL SEARCH REPORT
### Information on patent family members

International application No.

**PCT/CN2024/072053**

| Patent document cited in search report | | | Publication date (day/month/year) | Patent family member(s) | | | Publication date (day/month/year) |
|---|---|---|---|---|---|---|---|
| CN | 116165820 | A | 26 May 2023 | WO | 2023093063 | A1 | 01 June 2023 |
| CN | 116018549 | A | 25 April 2023 | US | 2022050333 | A1 | 17 February 2022 |
| | | | | US | 11442314 | B2 | 13 September 2022 |
| | | | | WO | 2022035652 | A1 | 17 February 2022 |
| CN | 217085455 | U | 29 July 2022 | | None | | |
| CN | 112147817 | A | 29 December 2020 | | None | | |
| CN | 1495490 | A | 12 May 2004 | CN | 100345049 | C | 24 October 2007 |
| CN | 112147812 | A | 29 December 2020 | | None | | |
| US | 2023093121 | A1 | 23 March 2023 | US | 11774824 | B2 | 03 October 2023 |
| US | 2020225418 | A1 | 16 July 2020 | US | 10901294 | B2 | 26 January 2021 |

Form PCT/ISA/210 (patent family annex) (July 2022)

**EP 4 715 457 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310748707X